Europäisches Patentamt

(19) European Patent Office

Office européen des brevets

(11) Numéro de publication : **0 184 107**
**B1**

(12) # FASCICULE DE BREVET EUROPÉEN

(45) Date de publication du fascicule du brevet :
02.11.89

(51) Int. Cl.⁴ : **H 04 B 17/02**

(21) Numéro de dépôt : 85114948.4

(22) Date de dépôt : 26.11.85

(54) **Procédé de télésignalisation pour une liaison de transmission numérique et dispositif pour sa mise en oeuvre.**

(30) Priorité : 30.11.84 FR 8418320

(43) Date de publication de la demande :
11.06.86 Bulletin 86/24

(45) Mention de la délivrance du brevet :
02.11.89 Bulletin 89/44

(84) Etats contractants désignés :
BE DE FR GB IT LU NL SE

(56) Documents cités :
CH—A— 644 234
DE—A— 2 203 415
GB—A— 2 056 822
GB—A— 2 131 657
PATENTS ABSTRACTS OF JAPAN, vol. 4, no. 97 (E-18) [579], 12 juillet 1980, page 85 E 18; & JP - A - 55 60 364 (FUJITSU K.K.) 07.05.1980

(73) Titulaire : ALCATEL CIT
33, rue Emeriau
F-75015 Paris (FR)

(72) Inventeur : Lacroix, Jean-Claude
11, Allée de la Vigne Dieu
F-91680 Bruyeres Le Chatel (FR)
Inventeur : Franco, Pierre
9, rue du Professeur Fleming
F-94260 Fresnes (FR)
Inventeur : Le Gall, Stéphane
c/ALCATEL BP-Nozay
F-91620 La Ville du Bois (FR)
Inventeur : Bourret, Gérard
1 et 3, Chemin de la Fosse aux Moines
F-91620 La Ville du Bois (FR)
Inventeur : Pochet, Jacques
18, rue des Glycines Le Plessis Pate
F-91220 Bretigny sur Orge (FR)

(74) Mandataire : Weinmiller, Jürgen et al
Lennéstrasse 9 Postfach 24
D-8133 Feldafing (DE)

**Description**

La présente invention est relative à la télésurveillance d'équipements répartis le long d'une liaison de transmission numérique.

Pour répondre aux exigences de durée de vie et de fiabilité imposées aux liaisons de transmission à très longue portée, il est apparu nécessaire de prévoir, dans le cadre des systèmes à fibres optiques, une certaine redondance au niveau des diodes laser équipant les répéteurs. Cette redondance obtenue en équipant dès l'origine chaque répéteur avec plusieurs diodes laser de rechange mises en service une à une par un circuit de commutation implique l'existence d'une télécommande des circuits de commutation des répéteurs depuis des équipements terminaux de la ligne et d'une télésignalisation depuis chaque répéteur renseignant les équipements terminaux sur l'état des diodes laser en service.

On connaît, par le document US A - 4 281 416, une liaison numérique par fibre optique équipée d'une télécommande permettant de remplacer dans chaque répéteur la diode laser en service par une diode laser de réserve et d'une télésignalisation propre à chaque répéteur permettant de transmettre une alarme dès le franchissement d'un seuil par le courant de polarisation de la diode laser en service. Le signal de télécommande est constitué d'un message numérique qui est de même nature que le signal numérique transmis par la liaison et qui est inséré au milieu du trafic par le terminal télésurveillant. Ce message numérique répété plusieurs fois consécutivement pour éviter les fausses manœuvres est formé d'une partie identifiant le répéteur concerné et d'une partie identifiant dans le répéteur concerné la diode laser à mettre en service. Le signal de télésignalisation est un motif formé d'une suite binaire pseudo-aléatoire dont la valeur initiale identifie le répéteur source.

Cette télésignalisation présente l'inconvénient de nécessiter dans chaque répéteur une source de suites pseudo-aléatoires fonctionnant au débit du signal numérique, c'est-à-dire, dans le cadre d'une transmission numérique par fibre optique, à un très grand débit uniquement réalisable en technologie ECL grande consommatrice d'énergie. Cela augmente de façon significative la consommation d'un répéteur et surtout sa dissipation thermique.

Elle a également l'inconvénient d'interrompre la liaison sur une durée suffisante pour provoquer une perte de synchronisation de la hiérarchie du train numérique et par conséquent de n'être adaptée qu'à la transmission d'alarmes majeures.

La présente invention a pour but d'éviter des inconvénients et d'obtenir une télésignalisation à message momentanément substitué aux données du train numérique acheminé par la liaison qui nécessite un minimum de circuits très rapides au niveau des circuits élaborant le message et qui ne perturbe pas le train numérique ou son traitement en dehors des instants d'émission du message.

Elle a pour objet un procédé de télésignalisation par substitution de message à des données d'un train numérique acheminé par une liaison de transmission consistant à transmettre la signalisation à l'aide d'un message numérique de même débit que le train numérique, ce message numérique étant formé de deux séquences l'une dite préfixe, l'autre suffixe, non consécutives, séparées par un intervalle de temps variable codant une information de télésignalisation.

La configuration binaire des séquences qui n'a plus l'exclusivité du codage des informations de télésignalisation peut n'avoir que très peu de variantes choisies avec le seul souci de satisfaire au mieux un critère de non imitation par le train numérique et de facilité d'élaboration à partir du signal de rythme récupéré toujours disponible dans un équipement intermédiaire d'une liaison de transmission numérique.

Les séquences préfixe et suffixe sont avantageusement formées d'une configuration périodique d'éléments binaires obtenue par répétition d'un motif simple construit avec un minimum de circuits très rapides à partir des premières sous-harmoniques du signal de rythme du train numérique acheminé par la liaison.

Pour la distinction du message de télésignalisation au milieu du train numérique, on joue sur la longueur des séquences et la définition du motif afin d'obtenir que la configuration d'une séquence soit interdite par le code redondant utilisé en ligne notamment pour permettre la surveillance des erreurs. Par exemple, avec un code à somme numérique bornée, on s'arrange pour que la configuration d'une séquence préfixe ou suffixe fasse déborder la somme numérique des limites imposées tandis qu'avec un code à bit d'insertion, on s'arrange pour qu'elle viole la loi de définition du bit inséré.

Avantageusement, chaque séquence préfixe ou suffixe est partagée en deux parties dont l'une est complémentée pour offrir une transition facilitant le repérage des extrémités de l'intervalle de temps codant une information de télésignalisation en cas d'imitation par le train numérique des débuts ou fins de séquence. Le sens de la configuration défini par l'emplacement de la partie non complémentée avant ou après la partie complémentée dans les séquences préfixe et suffixe est alors utilisé, conjointement avec l'intervalle de temps variable séparant lesdites séquences pour coder une information de télésurveillance.

La perte de synchronisation de la hiérarchie du train numérique lors de l'insertion du message de télésignalisation est évitée en donnant aux séquences de ce message des longueurs inférieures à celle d'un secteur de la trame de la hiérarchie la plus élevée du train numérique et en les séparant par un intervalle de temps nettement supérieur à la durée d'un secteur ou intervalle de temps de la hiérarchie la moins élevée.

La présente invention a également pour objet un dispositif de mise en œuvre du procédé précité.

D'autres caractéristiques et avantages de l'invention ressortiront de la description ci-après d'un mode de réalisation donné à titre d'exemple. Cette description sera faite en regard du dessin dans lequel :

— la figure 1 représente schématiquement l'implantation de circuits d'émission de messages de télésignalisation dans un répéteur bidirectionnel d'une liaison de transmission numérique à fibres optiques,

— la figure 2 représente un schéma électrique d'un circuit d'émission des messages de télésignalisation conforme à l'invention,

— la figure 3 est un diagramme de courbes explicitant le fonctionnement du circuit d'émission de message de télésignalisation de la figure 2,

— la figure 4 représente un synoptique d'un circuit adapté à la réception des messages de télésignalisation émis par le circuit de la figure 2,

— la figure 5 détaille les schémas de circuits de reconnaissance de parties complémentées ou non de séquences préfixes ou suffixes de message de télésignalisation et de circuits de détection de transitions mentionnés dans le synoptique de la figure 4 et

— la figure 6 détaille les schémas de circuits de discrimination entre transitions de séquences préfixe ou suffixe, d'identification de forme de séquences et de chronométrage mentionnés dans le synoptique de la figure 4.

La télésignalisation qui va être décrite s'applique à une liaison de transmission numérique à 295,600 Mbits/s par fibres optiques utilisant en ligne un code NRZ brouillé avec un élément binaire de parité de type 24 B1P et regroupant, par un multiplexage organisé en trames de 4,736 µs subdivisées en sept secteurs, deux trains numériques à 140 Mbits/s résultant d'un multiplexage numérique du quatrième ordre selon une hiérarchie conforme aux avis de la série G700 du CCITT. Prévue pour desservir au plus 200 équipements répartis sur la liaison et signaler deux types d'anomalies par équipement réparti, elle emploie un message formé d'une séquence préfixe et d'une séquence suffixe séparées d'un intervalle de temps variable.

Les séquences préfixe et suffixe présentent deux parties consécutives et complémentaires l'une de l'autre, l'une P respectivement S formée de 23 motifs successifs de type 1000 et l'autre $\overline{P}$ respectivement $\overline{S}$ formée de 23 motifs successifs de type 0111. La place de la partie non complémentée P par rapport à celle de la partie complémentée $\overline{P}$ d'une séquence préfixe code l'appartenance de l'équipement émetteur de message de télésignalisation à l'un ou l'autre de deux groupes de 100 équipements entre lesquels sont arbitrairement répartis les 200 équipements émetteurs de télésignalisation possibles. La place de la partie non complémentée S par rapport à celle de la partie complémentée $\overline{S}$ d'une séquence suffixe code le type d'anomalie.

L'intervalle de temps variable séparant la séquence préfixe de la séquence suffixe d'un message de télésignalisation varie de 50 à 100 µs par pas de 0,5 µs et permet de coder le rang de l'équipement émetteur au sein du groupe de 100 auquel il a été arbitrairement affecté.

Le message de télésignalisation ainsi constitué réalise un nombre minimal de deux viols de parité du code 24 B1 P ce qui assure sa non imitabilité en l'absence d'erreurs et une probabilité très inférieure à $1 \cdot 10^{-4}$ d'être imité une fois sur 25 ans par le train numérique en présence d'un taux d'erreur de $1 \cdot 10^{-2}$. Sa transparence au rythme du train numérique est très bonne puisqu'il présente au moins une transition par groupes de quatre éléments binaires. Son effet perturbateur sur la synchronisation de la hiérarchie du train numérique est faible et reste dans les limites tolérables puisque chacune de ses séquences préfixe et suffixe a une longueur de 184 éléments binaires correspondant, au débit de 295,600 Mbits/s, a une durée de 622 ns inférieure à celle 677 ns d'un secteur de trame de la hiérarchie la plus élevée du train numérique et que l'intervalle de temps séparant ses séquences préfixe et suffixe toujours au moins égal à 50 µs est nettement supérieur aux 20 µs d'un intervalle de temps ou secteur d'une trame du premier ordre comportant une justification.

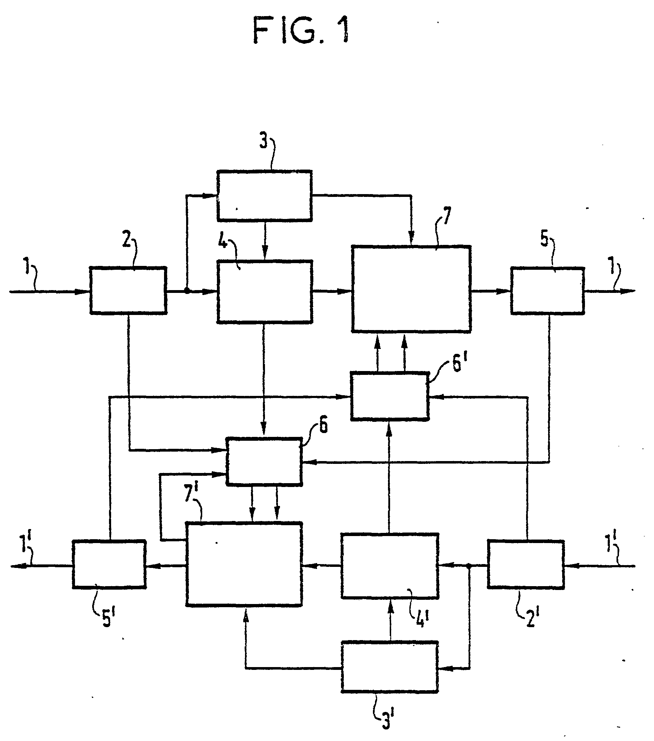

La figure 1 représente schématiquement un répéteur bidirectionnel de la liaison équipé pour chaque voie d'un circuit d'émission de télésignalisation contrôlé par un circuit de détection et de gestion des alarmes surveillant l'autre voie.

L'une des voies régénère les signaux optiques empruntant une fibre optique 1 dans un sens et l'autre les signaux optiques empruntant une fibre optique 1' dans l'autre sens. Chacune d'elles comporte de manière classique un démodulateur opto-électrique 2, 2' recevant le signal optique à régénérer de la fibre optique 1, 1', des circuits électroniques de remise en forme du signal constitués essentiellement par un circuit de récupération de cadence bit 3, 3' et d'un circuit de régénération 4, 4', un modulateur optique 5, 5' qui reçoit le signal régénéré et le réintroduit dans la fibre optique 1, 1'. Elles sont en outre dotées d'un circuit de détection et de gestion des alarmes 6, 6' surveillant le bon fonctionnement des éléments précités et capable d'émettre deux types d'alarme, et d'un circuit d'émission de télésignalisation 7, 7' intercalé entre le circuit de régénération 4, 4' et le modulateur optique 5, 5' et contrôlé à la fois par leur propre circuit de récupération de cadence bit 3, 3' et par le circuit de détection et de gestion des alarmes 6', 6 de l'autre voie.

En cas d'anomalie sur l'une des voies, le circuit de détection et de gestion des alarmes 6, 6' déclenche l'émission d'une télésignalisation sur l'autre voie en direction du terminal situé en amont par rapport à la voie victime de l'anomalie qui peut alors prendre les mesures nécessaires pour y remédier soit par détournement du trafic, soit par télécommande d'une modification de structure par exemple échange de la diode laser en fonctionnement.

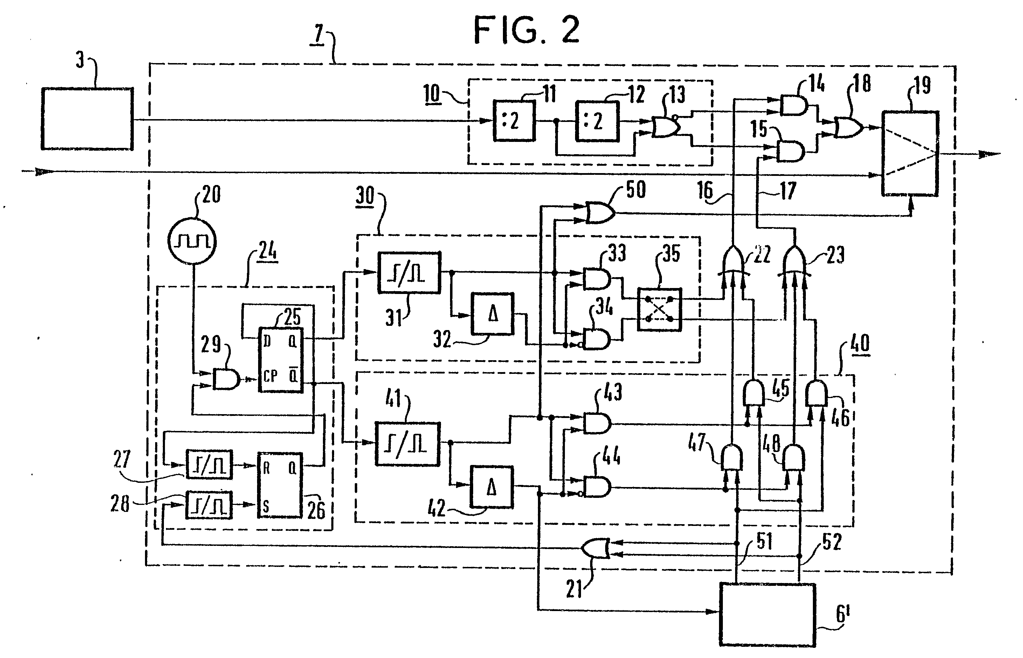

La figure 2 illustre un exemple de réalisation de l'un des circuits d'émission de télésignalisation. Celui-ci, 7, comporte :

— un générateur 10 de motifs binaires répétitifs 1000 ou 0111 formé de deux diviseurs par deux 11, 12 connectés à la suite, à la sortie du circuit de récupération de cadence bit 3, et d'une porte logique de type « ou » 13 à deux entrées et deux sorties l'une inversée, l'autre non, connectée par ses entrées aux sorties des diviseurs par deux 11, 12 et délivrant sur sa sortie inversée le motif binaire répétitif 1000 et sur sa sortie non inversée le motif binaire complémentaire 0111,

— un circuit de sélection de types de motifs constitué à l'aide de deux portes logiques de type « et » 14, 15 à deux entrées l'une 16, respectivement 17 servant d'entrée de sélection et l'autre étant connectée à l'une des sorties du générateur de motifs, et à l'aide d'une porte logique de type « ou » 18 réunissant les sorties des deux portes logiques précédentes 14 et 15,

— un aiguillage formé d'un multiplexeur 19 à deux entrées connecté par une entrée à la sortie de la porte logique de type « ou » 18 constituant celle du circuit de sélection de types de motifs et intercalé par son autre entrée et sa sortie entre le circuit de régénération du train numérique (4, figure 1) et le modulateur optique (5, figure 1),

— un oscillateur 20 engendrant un signal d'horloge rectangulaire définissant par sa période l'intervalle de temps séparant les séquences préfixe et suffixe d'un message de télésignalisation émis par l'équipement considéré,

— un séquenceur 24 qui est déclenché par le circuit de détection et de gestion des alarmes 6′ par l'intermédiaire d'une porte logique de type « ou » 21 connectée aux sorties du circuit 6′ et qui détermine sous le contrôle de l'oscillateur 20 les instants initiaux d'émission des séquences préfixe et suffixe d'un message de télésignalisation,

— un circuit 30 de composition d'une séquence préfixe qui est déclenché par le séquenceur 24 et qui agit sur les entrées 16, 17 du circuit de sélection de types de motifs par l'intermédiaire de deux portes logiques 22, 23 de type « ou » à trois entrées et sur la commande d'adressage du multiplexeur 19 formant le circuit d'aiguillage par l'intermédiaire d'une porte logique 50 de type « ou » à deux entrées,

— et un circuit 40 de composition d'une séquence suffixe qui est également déclenché par le séquenceur 24 et qui agit, comme le circuit 30 de composition d'une séquence préfixe sur les entrées 16, 17 du circuit de sélection de types de motifs par l'intermédiaire des portes logiques 22, 23 de type « ou » à trois entrées et sur la commande d'adressage du multiplexeur 19 formant le circuit d'aiguillage par l'intermédiaire de la porte logique de type « ou » à deux entrées 50.

Le signal d'horloge de l'oscillateur 20 qui définit l'intervalle de temps séparant la séquence préfixe de la séquence suffixe d'un message de télésignalisation de l'équipement considéré à une fréquence basse comprise entre 10 et 20 kHz et peut être obtenu à partir du battement inférieur des signaux de deux oscillateurs opérant à des fréquences plus élevées, plus faciles à réaliser avec une grande stabilité à la fois instantanée et dans le temps.

Lorsqu'il est excité par le circuit de détection et de gestion des alarmes 6′, le séquenceur 24 déclenche le circuit 30 de composition d'une séquence préfixe sur le premier front descendant du signal d'horloge de l'oscillateur 20 qui lui parvient puis le circuit 40 de composition d'une séquence suffixe sur le front descendant suivant et se rebloque.

Le séquenceur 24 peut être réalisé, comme représenté, à l'aide d'une bascule de type D 25 sensible aux fronts descendants de son signal d'horloge, montée en diviseur par deux, d'une bascule RS 26 dont les entrées sont attaquées par l'intermédiaire de monostables 27, 28 déclenchés sur front montant, l'une R par la sortie complémentée $\overline{Q}$ de la bascule D 25 et l'autre S par la porte logique de type « ou » 21 connectée en sortie du circuit de détection et de gestion des alarmes 6′, et d'une porte logique de type « et » 29 à deux entrées placée devant l'entrée d'horloge de la bascule D 25 et connectée par l'une de ses entrées à la sortie de l'oscillateur 20 et par l'autre à la sortie Q de la bascule RS 26.

En l'absence d'alarme, le circuit de détection et de gestion des alarmes 6′ maintient ses deux sorties à un niveau logique 0 transmis par la porte logique de type « ou » 21. La bascule RS 26 qui ne reçoit pas d'impulsion sur son entrée S maintient sur sa sortie Q le niveau logique 0 acquis lors de la mise sous tension ou lors de la dernière impulsion appliquée à son entrée R consécutivement au passage au niveau logique 1 de la sortie $\overline{Q}$ de la bascule D 25 survenu au début de la séquence suffixe du dernier mot de télésignalisation émis.

Ce niveau logique 0 maintenu en sortie de la bascule RS 26 et transmis par l'intermédiaire de la porte logique de type « et » 29 à l'entrée d'horloge de la bascule D 25 bloque cette dernière dont la sortie Q reste au niveau logique 0 atteint lors de la mise sous tension ou au début de la séquence suffixe du dernier mot de télésignalisation émis.

Dès l'apparition d'une alarme, l'une des sorties du circuit de détection et de gestion des alarmes 6′ passe au niveau logique 1 engendrant une transition positive qui se propage à travers la porte logique de type « ou » 21 et qui est transformée par le circuit 28 en une impulsion appliquée sur l'entrée S de la bascule RS 26. Cette impulsion fait changer d'état la bascule RS 26 dont la sortie Q passe au niveau logique un et débloque la porte logique de type « et » 29 disposée en entrée d'horloge de la bascule D 25. Le signal d'horloge de l'oscillateur 20 parvient alors à l'entrée d'horloge de la bascule D 25. Son premier front descendant suivant le déblocage de la porte 29 fait changer d'état la bascule D 25 qui délivre sur sa sortie Q une transition positive marquant le début d'une séquence préfixe. Le front montant suivant n'a pas d'effet. Le deuxième front descendant provoque le retour à l'état initial de la bascule D 25 qui délivre sur sa sortie complémentée $\overline{Q}$ une transition positive marquant le début d'une séquence suffixe. Cette dernière transition positive, transformée en impulsion par le circuit 27, remet au niveau logique zéro la sortie Q de la bascule RS 26 qui bloque à nouveau, par l'intermédiaire de la porte logique de type « et » 29, l'entrée d'horloge de la bascule D 25 jusqu'à l'émission d'un autre message de télésignalisation.

Le circuit 30 de composition de séquence préfixe peut être réalisé, comme représenté, grâce à :

— un monostable 31 qui est connecté à la sortie Q de la bascule D 25 du séquenceur 24 et qui, déclenché par une transition positive, délivre sur sa sortie une impulsion positive de la largeur d'une séquence c'est-à-dire 622 ns,

— un circuit à retard 32 connecté en sortie du monostable 31 dont il retarde l'impulsion d'un délai égal à la moitié de la durée d'une séquence c'est-à-dire 311 ns,

— deux portes logiques de type « et » 33, 34 à deux entrées, l'une 33 avec deux entrées non inverseuses connectées en sortie du monostable 31 et du circuit à retard 32 et l'autre 34 avec une entrée non inverseuse connectée en sortie du monostable 31 et une entrée inverseuse connectée en sortie du circuit à retard 32,

— et une boîte de connexion 35 permettant de permuter ou non les connexions des sorties des portes logiques de type « et » 33, 34 aux entrées des portes logiques de type « ou » 22, 23.

Le monostable 31 définit la durée d'une séquence préfixe. Son impulsion de sortie est utilisée à deux fins. Elle est à la fois appliquée sur l'entrée de commande du multiplexeur 19 par l'intermédiaire de la porte logique de type « ou » 50 pour provoquer la connexion momentanée de la sortie du circuit de sélection de type de motifs à l'entrée du modulateur optique (5, figure 1) de l'équipement et sur l'une des entrées de sélection 16, 17 par l'intermédiaire de l'une des portes logiques de type « et » 33 ou 34, de la boîte de connexion 35 et de l'une des portes logiques de type « ou » 22, 23 afin de faire apparaître un type de motif en sortie du circuit de sélection de types de motifs.

Le circuit à retard 32 définit la transition qui sépare les deux parties P, $\overline{P}$ complémentées l'une par rapport à l'autre d'une séquence préfixe en aiguillant par l'intermédiaire des portes logiques de type « et » 33, 34 une première partie de l'impulsion du monostable 31 vers l'une 16 respectivement 17 des entrées de sélection du circuit de sélection de types de motifs et une deuxième partie de cette même impulsion sur l'autre entrée 17 respectivement 16.

La boîte de connexion 35 permet de choisir celle 16 ou 17 des entrées de sélection à laquelle est appliquée la première partie de l'impulsion du circuit monostable 31 et par conséquent l'ordre d'apparition des parties complémentée et non complémentée $\overline{P}$, P d'une séquence de préfixe.

Le circuit 40 de composition de séquence préfixe présente une configuration analogue à celle du circuit 30 de composition de séquence suffixe. Il comporte :

— un monostable 41 qui est connecté à la sortie complémentée $\overline{Q}$ de la bascule D 25 du séquenceur 24 et qui, déclenché par une transition positive, délivre sur sa sortie une impulsion positive de la largeur d'une séquence c'est-à-dire 622 ns,

— un circuit de retard 42 connecté en sortie du monostable 41 dont il retarde l'impulsion d'un délai égal à la moitié de la durée d'une séquence c'est-à-dire 311 ns,

— une paire de portes logiques de type « et » 43, 44 à deux entrées, l'une 43 avec deux entrées non inverseuses connectées en sortie du monostable 41 et du circuit à retard 42, l'autre 44 avec une entrée non inverseuse connectée en sortie du monostable 41 et une entrée inverseuse connectée en sortie du circuit à retard 42 et

— une double paire de portes logiques de type « et » 45, 46, 47, 48 à deux entrées non inverseuses couplées deux par deux d'une part par leurs entrées à la fois aux deux sorties de la paire de portes logiques de type « et » 43, 44 selon un premier arrangement et aux deux sorties du circuit de détection et de gestion des alarmes 6' selon un deuxième arrangement distinct du premier, et d'autre part par leurs sorties aux entrées des portes logiques de type « ou » 21, 23 selon le troisième arrangement possible.

Le monostable 41 définit la durée d'une séquence suffixe. Comme dans le cas du monostable 31, son impulsion de sortie est à la fois appliquée sur l'entrée de commande du multiplexeur 19 par l'intermédiaire de la porte logique de type « ou » 50 pour provoquer la connexion momentanée de la sortie du circuit de sélection de types de motifs à l'entrée du modulateur optique (5, figure 1) de l'équipement et sur l'une des entrées de sélection 16, 17 afin de faire apparaître un type de motif en sortie du circuit de sélection de types de motifs.

Le circuit à retard 42 définit la transition qui sépare les deux parties S et $\overline{S}$ complémentées l'une par rapport à l'autre d'une séquence suffixe et opère avec la paire de portes logiques 43, 44, de manière analogue au circuit à retard 31 la paire de porte logiques 33, 34, en aiguillant une première partie de l'impulsion du monostable 41 vers l'une 16 respectivement 17 des entrées de sélection du circuit de sélection de types de motifs et une deuxième partie de cette même impulsion vers l'autre entrée 17 respectivement 16.

La double paire de portes logiques 45, 46, 47, 48 constitue un circuit de permutation permettant d'intervertir les connexions des sorties de la paire de portes logiques de type « et » 43, 44 aux entrées des portes logiques de type « ou » 22, 23 de manière à pouvoir choisir, en fonction de la sortie mise au niveau logique un par le circuit de détection et de gestion des alarmes 6', celle 16 ou 17 des entrées de sélection à laquelle est appliquée la première partie de l'impulsion du monostable 41 et par conséquent l'ordre d'apparition des parties complémentées et non complémentées $\overline{S}$ et S d'une séquence suffixe.

La transition négative apparaissant à la sortie du circuit à retard 42 après la fin de la séquence suffixe c'est-à-dire du message de télésignalisation est utilisée comme signal d'acquittement et envoyé au circuit de détection et de gestion des alarmes 6' afin de le désarmer.

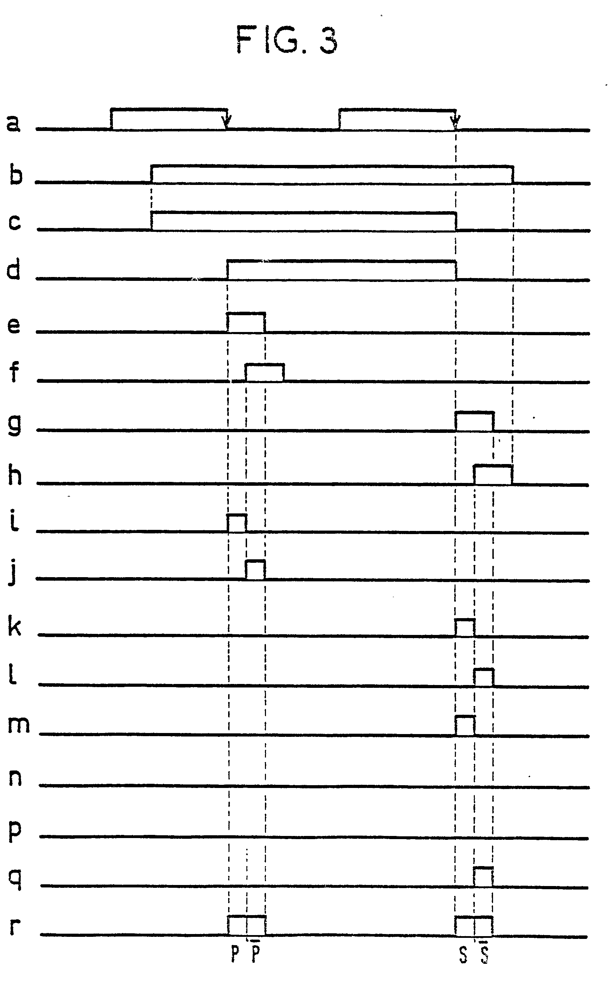

La figure 3 est un diagramme de temps illustrant les formes des signaux logiques disponibles en différentes parties du circuit d'émission de la figure 2. La courbe a représente le signal d'horloge engendré par l'oscillateur 20, la courbe b le signal sur la sortie d'alarme 51 du circuit de détection et de gestion des alarmes 6', la courbe c le signal à la sortie Q de la bascule RS 26 du séquenceur 24, la courbe d le signal à la sortie Q de la bascule D 25 du séquenceur 24, la courbe e le signal à la sortie du monostable 31 du circuit de composition de séquence préfixe 30, la courbe f le signal à la sortie du circuit à retard 32 du circuit de composition de séquence préfixe 30, la courbe g le signal à la sortie du monostable 41 du circuit de composition de séquence suffixe 40, la courbe h le signal à la sortie du circuit à retard 42 du circuit de composition de séquence suffixe 40, la courbe i le signal à la sortie de la porte logique 34, la courbe j le signal à la sortie de la porte logique 33, la courbe k le signal à la sortie de la porte logique 44, la courbe 1 le signal à la sortie de la porte logique 43, la courbe m le signal à la sortie de la porte logique 48, la courbe n le signal à la sortie de la porte logique 47, la courbe p le signal à la sortie de la porte logique 46, la courbe q le signal à la sortie de la porte logique 45 et la courbe r schématise le message de télésignalisation obtenu dans le cas où le câblage de la boîte de connexion 35 correspond à un croisement de fils.

On remarque que les débuts et fins des séquences préfixe et suffixe délivrées en sortie de la porte logique de type « ou » 18 du circuit de sélection de types du motifs, ainsi que leurs transitions, ne sont pas synchronisés sur les transitions entre éléments binaires du train numérique ni avec les transitions entre motifs. Cette propriété qui simplifie notablement la réalisation du circuit émetteur est rendue possible par le pas choisi de 0,5 μs pour différencier les intervalles de temps séparant les séquences préfixe et suffixe des messages de télésignalisation qui est très supérieur à la durée d'un élément binaire ou d'un motif. Bien entendu, en entrée du circuit d'aiguillage 19, une bascule d'échantillonnage, non représentée, commandée par le circuit de récupération de cadence bit 3 assure la synchronisation du signal en sortie de la porte 18 avec la cadence bit du train numérique.

Seul un petit nombre d'éléments, ceux du générateur de motifs répétitifs qui sont des diviseurs par deux réalisables à l'aide de bascules JK et quelques portes logiques du type « ou » ou « non ou », de l'aiguillage et du circuit de sélection de type de motif également réalisable à l'aide de portes logiques du type « ou » ou « non ou » ressortent d'une technologie très rapide type ECL compatible avec le débit à 295,600 Mbits/s mais forte consommatrice d'énergie tandis que les autres éléments fonctionnent à un débit réduit accessible avec une technologie rapide type I²L ou Schottky beaucoup plus économe en énergie.

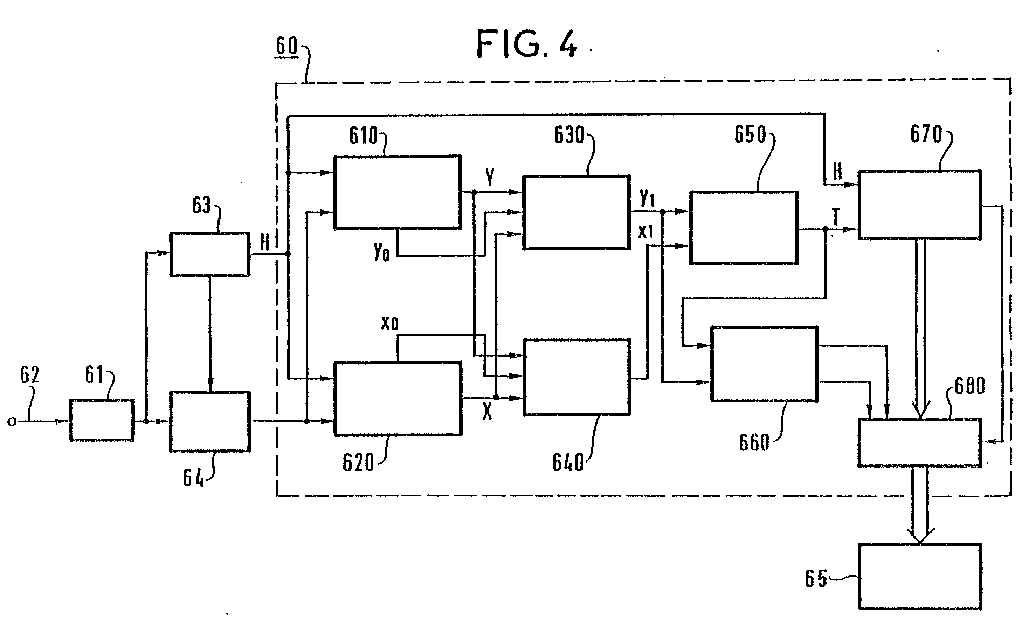

La figure 4 représente un exemple de réalisation d'un circuit de réception de télésignalisation 60, dans son environnement, intercalé à l'intérieur d'un équipement entre d'une part la tête de la voie de réception formée d'un démodulateur opto-électronique 61 sur lequel aboutit une fibre optique 62 acheminant le train numérique incident et de circuits électroniques de remise en forme du signal constitués principalement d'un circuit de récupération de cadence bit 63 et d'un circuit de régénération 64, et d'autre part un circuit d'exploitation de la signalisation 65 qui ne seront pas détaillés car ils sortent du cadre de la présente invention.

Le circuit de réception de télésignalisation 60 comporte essentiellement :

— un circuit 610 de reconnaissance de partie non complémentée P ou S d'une séquence préfixe ou suffixe avec un détecteur de motifs 1000 engendrant sur une première sortie un signal Y de reconnaissance d'une partie non complémentée P ou S et sur une deuxième sortie un signal $y_0$ d'identification de motif 1000,

— un circuit 620 de reconnaissance de partie complémentée $\overline{P}$ ou $\overline{S}$ d'une séquence préfixe ou suffixe avec un détecteur de motifs 0111 engendrant sur une première sortie un signal $\overline{X}$ de reconnaissance d'une partie complémentée $\overline{P}$ ou $\overline{S}$ et sur une deuxième sortie un signal $x_0$ d'identification de motif 0111,

— un circuit 630 de détection de la transition existant dans une séquence préfixe ou suffixe formée d'une partie complémentée $\overline{P}$ ou $\overline{S}$ suivie d'une partie non complémentée $\overline{P}$ ou $\overline{S}$ connecté à la suite des circuits 610, 620 de reconnaissance des parties complémentée et non complémentée, engendrant un signal de détection de transition $y_1$,

— un circuit 640 de détection de la transition existant dans une séquence préfixe ou suffixe formée d'une partie non complémentée P ou S suivie d'une partie complémentée P ou S connecté à la suite des circuits 610, 620 de reconnaissance des parties complémentées et non complémentées, engendrant un signal de détection de transition $x_1$,

— un circuit 650 de discrimination entre les transitions de séquences préfixe et suffixe connecté aux sorties des circuits 630, 640 de détection de transitions engendrant un signal T formé d'un créneau limité par lesdites transitions,

— un circuit 660 d'identification des formes des séquences préfixe et suffixe (partie complémentée placée avant ou après la partie non complémentée) connecté à la sortie du circuit de détection de transitions 630 et à celle du circuit de discrimination des transitions 650,

— un circuit 670 de chronométrage de la durée du créneau engendré par le circuit de discrimination des transitions 650 et

— une mémoire d'échantillonnage 680 qui reçoit les signaux de sortie du circuit 660 d'identification des formes des séquences préfixe et suffixe, et du circuit de chronométrage 670 et qui est inscrite après chaque créneau engendré par le circuit de discrimination entre les transitions de séquences préfixe et suffixe 650.

Le circuit de réception de télésignalisation procède par étapes à la reconnaissance d'un message de télésignalisation. Il commence d'abord par détecter dans le train numérique transmis les parties non complémentées P ou S ou complémentées $\overline{P}$ ou $\overline{S}$ de séquence indépendamment de la nature préfixe ou suffixe des séquences à l'aide des circuits de reconnaissance 610, 620. Une fois détectée une partie non complémentée P ou S ou complémentée $\overline{P}$ ou $\overline{S}$, il cherche une transition entre deux parties d'une même séquence en cherchant le premier motif de la partie complémentaire et la confirmation de l'existence de la partie complémentaire à l'aide des circuits de détection de transition 630, 640 qui sont spécialisés l'un pour les transitions apparaissant dans les séquences commençant par une partie non complémentée et se terminant par une partie complémentée et l'autre pour les transitions apparaissant dans les autres séquences. La première transition détectée est considérée comme appartenant à la séquence préfixe dont la structure (partie non complémentée avant ou après la partie complémentée) est identifiée en repérant par le circuit d'identification de forme 660 quel est celui des circuits de détection de transition 630 ou 640 qui a fonctionné. Elle sert au déclenchement du circuit de chronométrage 670. La deuxième transition détectée est considérée comme appartenant à la séquence suffixe dont la structure est également identifiée en repérant par le circuit d'identification de forme 660 quel est celui des circuits de détection de transition qui a fonctionné. Elle sert à l'arrêt du circuit de chronométrage 670 ainsi qu'à l'inscription, dans la mémoire d'échantillonnage 680 du contenu du message de télésignalisation c'est-à-dire : nature de la séquence préfixe (partie non complémentée avant ou après la partie complémentée) qui renseigne sur le groupe de 100 équipements auquel appartient l'émetteur du message de télésignalisation, durée de l'intervalle de temps séparant les transitions des séquences préfixe et suffixe du message qui renseigne sur le rang de l'équipement émetteur au sein de son groupe et nature de la séquence suffixe qui renseigne sur le type d'alarme.

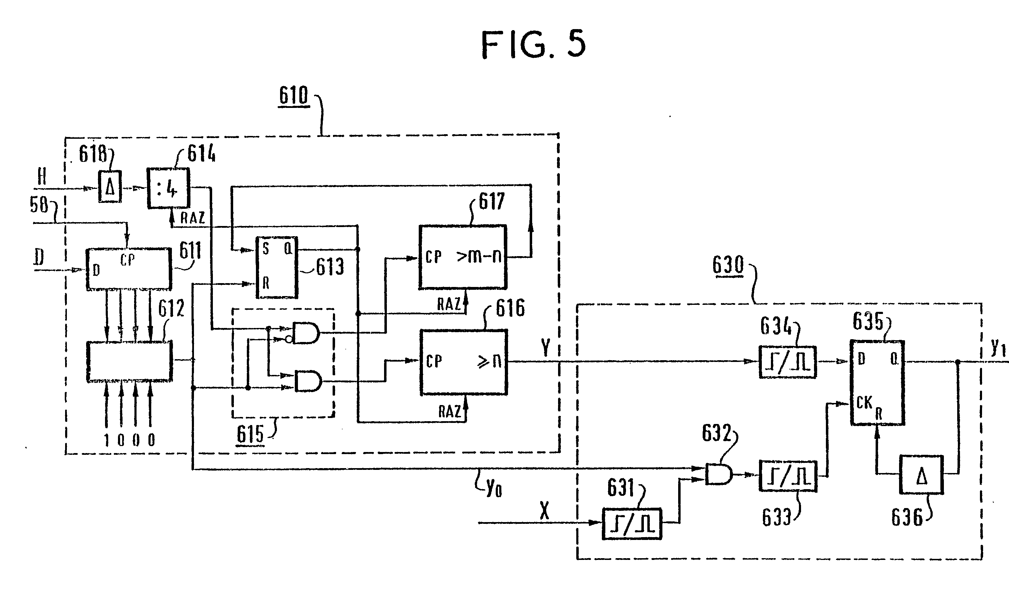

La figure 5 détaille un mode de réalisation du circuit 610 de reconnaissance d'une partie non complémentée et du circuit 630 de détection de transition dans une séquence débutant par une partie complémentée.

Une partie non complémentée de séquence suffixe ou préfixe est constituée, comme indiqué précédemment, par une suite de 23 motifs binaires consécutifs de type 1000. Pour la reconnaître, le circuit 610 adopte la cadence de motif coïncidant avec le premier motif 1000 détecté et vérifie que ce motif fait partie d'une suite de n motifs 1000 parmi m motifs successifs c'est-à-dire parmi une succession d'éléments binaires du train numérique débutant par lui-même et ayant au plus la longueur de m motifs, n étant pris égal à 21 et m à 23 ce qui autorise une erreur sur un motif.

Le circuit 610 de reconnaissance d'une partie non complémentée est réalisé à l'aide :

— d'un registre à décalage 611 à quatre étages, entrée série et sortie parallèle, qui reçoit sur son entrée « données » le train numérique D remis en forme provenant du circuit de régénération 64 et sur son entrée d'horloge le rythme bit H fourni par le circuit de récupération de rythme bit 63,

— d'un comparateur 612 de deux nombres binaires de quatre chiffres ayant une entrée câblée aux niveaux logiques 1000 et l'autre entrée connectée à la sortie parallèle du registre à décalage 611, et une sortie délivrant le signal $y_0$ d'identification de motif 1000,

— d'un circuit de déclenchement formé d'une bascule RS 613 connectée par son entrée R à la sortie du comparateur 612,

— d'un générateur de cadence de motifs formé d'un diviseur ou compteur par quatre 614 qui opère sur le rythme bit fourni par le circuit de récupération de rythme bit 63 et qui délivre un signal dissymétrique au niveau logique 1 pour l'état 1 et au niveau logique 0 pour les trois autres états présentant des transitions positives synchronisées, avec un léger retard, sur l'instant de détection du premier motif par le comparateur 611 grâce au contrôle de son entrée de remise à zéro par la sortie Q de la bascule RS 613 du circuit de déclenchement, une ligne à retard 618 agissant sur le signal H au rythme bit en entrée du diviseur par quatre 614 pour compenser le retard au déblocage du diviseur 614 par rapport à la transition du signal au rythme bit issu du circuit de récupération 63 qui a provoqué ce déblocage,

— d'un détecteur à coïncidence 615 échantillonnant la sortie du comparateur 612 au rythme du générateur de cadence de motifs pour émettre sur deux sorties distinctes des ordres de comptage de présence ou d'absence de motif de partie non complémentée et comportant une première porte logique de type « et » à deux entrées non inverseuses, qui délivre les ordres de comptage de présence de motif sous la forme de transitions positives et dont les entrées sont connectées l'une à la sortie du comparateur 612 et l'autre à celle du diviseur par quatre 614 du générateur de cadence de motifs et une deuxième porte logique de type « et » à deux entrées l'une inverseuse l'autre non, qui délivre les ordres de comptage d'absence de motif sous la forme de transitions positives et qui est connectée par son entrée inverseuse à la sortie du comparateur 612 et par son entrée non inverseuse à celle du diviseur par quatre 614 du générateur de cadence de motifs,

— d'un compteur par n 616 avec une entrée de remise à zéro commandée par la sortie Q de la bascule RS 613 du circuit de déclenchement, une entrée de comptage sensible aux transitions positives connectée à la sortie d'ordres de comptage de présence de motif du détecteur à coïncidence 615 et une sortie de débordement passant au niveau logique 1 lorsque son compte atteint ou dépasse n et constituant celle Y du circuit de reconnaissance de partie non complémentée P ou S et

— d'un compteur par m — n 617 avec une entrée de remise à zéro commandée par la sortie Q de la bascule RS 613 du circuit de déclenchement, une entrée de comptage sensible aux transitions positives connectée à la sortie d'ordres de comptage d'absence de motif du détecteur à coïncidence 615 et une sortie de débordement passant au niveau logique 1 lorsque son compte dépasse m — n et contrôlant l'entrée S de la bascule RS 613 du circuit de déclenchement.

En l'absence d'un motif 1000 dans les éléments binaires du train numérique se succédant sur une longueur strictement supérieure à m — n motifs le circuit de déclenchement formé de la bascule RS 613 est désarmé, sa sortie Q délivrant un niveau logique 1 qui bloque à zéro le diviseur par quatre 614 du générateur de cadence de motifs et les compteurs par n et m — n de présence et d'absence de motif 616, 617.

Dès qu'un motif 1000 apparaît dans le train numérique délivré par le circuit de régénération 64, le comparateur 612 le détecte et délivre en réponse une impulsion positive armant la bascule RS 613 du circuit de déclenchement dont la sortie Q passe au niveau logique 0 débloquant les compteurs par n et m — n de présence et d'absence de motif 616, 617 et le diviseur par quatre 614 du générateur de cadence de motif dont les transitions positives sont alors synchronisées, avec un léger retard, sur l'instant de détection du motif initial 1000 par le comparateur 612. Cette dernière impulsion positive parvient également au détecteur à coïncidence 615 qui la prend en compte pour engendrer un ordre de comptage de présence de motif à destination du compteur par n 616. A chaque transition positive ultérieure du signal de sortie du diviseur par quatre 614 du générateur de cadence de motifs, le détecteur à coïncidence 615 prend en compte la présence ou l'absence d'une nouvelle impulsion positive en sortie du comparateur 612 pour engendrer un ordre de comptage de présence ou d'absence de motif à destination du compteur par n 616 ou par m — n 617.

Le débordement du compteur par m — n 617 traduit un nombre d'absences de reconnaissance de motifs supérieur à m — n et par conséquent l'impossibilité d'être en présence d'une partie non complémentée de séquence. Il désarme la bascule RS 613 du circuit de déclenchement qui rebloque à nouveau à zéro le diviseur par quatre 614 du générateur de cadence de motifs et les compteurs par n et m — n 616 et 617.

Le débordement du compteur par n 616 qui ne peut se produire qu'en l'absence de débordement du compteur par m — n 617 traduit la reconnaissance d'une partie non complémentée de séquence et constitue le signal de sortie Y du circuit 610.

Le circuit 620 de reconnaissance d'une partie complémentée $\overline{P}$ ou $\overline{S}$ de séquence préfixe ou suffixe peut avoir une structure identique au circuit 610, l'entrée câblée du comparateur étant cette fois portée aux niveaux logiques 0111 caractéristiques d'une partie complémentée.

Le circuit 630 de détection de la transition existant dans une séquence commençant par une partie complémentée et se terminant par une partie non complémentée comporte :

— un premier circuit monostable 631 qui est déclenché par un front montant du signal X coïncidant avec la reconnaissance par le circuit 620 d'une partie complémentée $\overline{P}$ ou $\overline{S}$ de séquence préfixe ou suffixe et qui engendre un créneau positif sur une durée égale à celle de 25 motifs ou 100 éléments binaires ou encore 338 ns avec le débit adopté de 295,600 Mbits/s recouvrant la durée d'une partie complémentée ou non de séquence.

— une porte logique de type « et » 632 à deux entrées l'une connectée à la sortie du premier circuit monostable 631 et l'autre recevant le signal $y_0$ du circuit de reconnaissance de partie non complémentée 610 présentant des impulsions positives à chaque reconnaissance de motif 1000,

— un deuxième circuit monostable 633 qui est déclenché par un front montant du signal de sortie de la porte logique de type « et » 632 et qui engendre un créneau positif sur une durée égale à celle de 25 motifs ou 100 éléments binaires ou encore 338 ns avec le débit adopté de 295,600 MBits/s,

— un troisième circuit monostable 634 qui est déclenché par un front montant du signal Y coïncidant avec la reconnaissance par le circuit 610 d'une partie non complémentée P ou S de séquence et qui engendre un créneau positif sur la durée de quelques motifs par exemple 50 ns et

— une bascule de type D 635 avec une entrée donnée D recevant le signal de sortie du troisième circuit monostable 634, avec une entrée d'horloge CK sensible aux fronts descendants connectée à la sortie du deuxième circuit monostable 633 et avec une entrée de remise à zéro R connectée à sa sortie Q par l'intermédiaire d'un circuit à retard 636 introduisant un délai de 1 μs.

A chaque détection d'une partie complémentée $\overline{P}$ ou $\overline{S}$ d'une séquence le circuit 620 fait passer sa sortie X au niveau logique 1 ce qui déclenche le premier monostable 631 entraînant le déblocage de la porte logique de type « et » 632 sur une certaine durée dans l'attente de la reconnaissance du premier motif 1000 d'une partie non complémentée P ou S qui doit se manifester par une impulsion positive dans le signal $y_0$. La fenêtre temporelle ainsi définie pour sélectionner dans le

signal $y_0$ l'impulsion correspondant à la reconnaissance du premier motif 1000 de la deuxième partie d'une séquence commençant par une partie complémentée doit avoir une durée suffisante pour tenir compte des possibilités maximales d'imitation par les données du train numérique d'une suite de motifs 0111 en tête d'une partie complémentée $\overline{P}$ ou $\overline{S}$, ces possibilités pouvant entraîner une anticipation de la détection de cette partie complémentée que l'on doit compenser par une largeur suffisante de la fenêtre. Une durée égale ou légèrement supérieure à celle d'une partie complémentée ou non de séquence convient.

Si la partie complémentée ayant provoqué la transition au niveau logique 1 du signal X est le début d'une séquence, elle est suivie d'une partie non complémentée dont le premier motif 1000 suit à court terme la transition que l'on cherche à situer. La détection de ce premier motif se fait dans la fenêtre temporelle déterminée par le premier monostable 631 et provoque l'apparition dans le signal $y_0$ d'une impulsion qui franchit la porte logique de type « et » 632 et déclenche le deuxième monostable 633.

Ce dernier repasse au repos au bout d'une durée légèrement supérieure à la durée maximale nécessaire au circuit 610 pour reconnaître une partie non complémentée P ou S de séquence. Dans le cas présent où l'on admet une erreur sur un motif, cette durée maximale est de 24 motifs ou 325 ns. A l'instant où le deuxième monostable 633 repasse à zéro, la bascule de type D 635 recopie le niveau logique appliqué sur son entrée D. Ce dernier est le niveau logique 1 si le troisième monostable a été déclenché par une partie non complémentée P ou S ayant été effectivement reconnue par le circuit 610 ou le niveau logique 0, aucune partie non complémentée n'ayant été reconnue par le circuit 610 et le motif 1000 pris pour le début d'une partie non complémentée n'étant qu'une imitation par les données du train numérique.

Ainsi, l'apparition d'un niveau logique 1 en sortie Q de la bascule de type D 635 du circuit de détection de transition 630 traduit l'apparition d'une transition dans une séquence préfixe ou suffixe d'un message de télésignalisation composée d'une partie complémentée $\overline{P}$ ou $\overline{S}$ suivie d'une partie non complémentée P ou S.

1 μs après toute transition au niveau logique 1, la sortie Q de la bascule de type D 635 est remise à zéro par l'intermédiaire du circuit à retard 636 permettant au circuit de détection 630 d'être à nouveau disponible pour la détection d'une autre transition.

Le circuit 640 de détection de la transition existant dans une séquence préfixe ou suffixe composée d'une partie non complémentée P ou S suivie d'une partie complémentée $\overline{P}$ ou $\overline{S}$ présente une structure identique à celle qui vient d'être décrite pour le circuit de détection de transition 630.

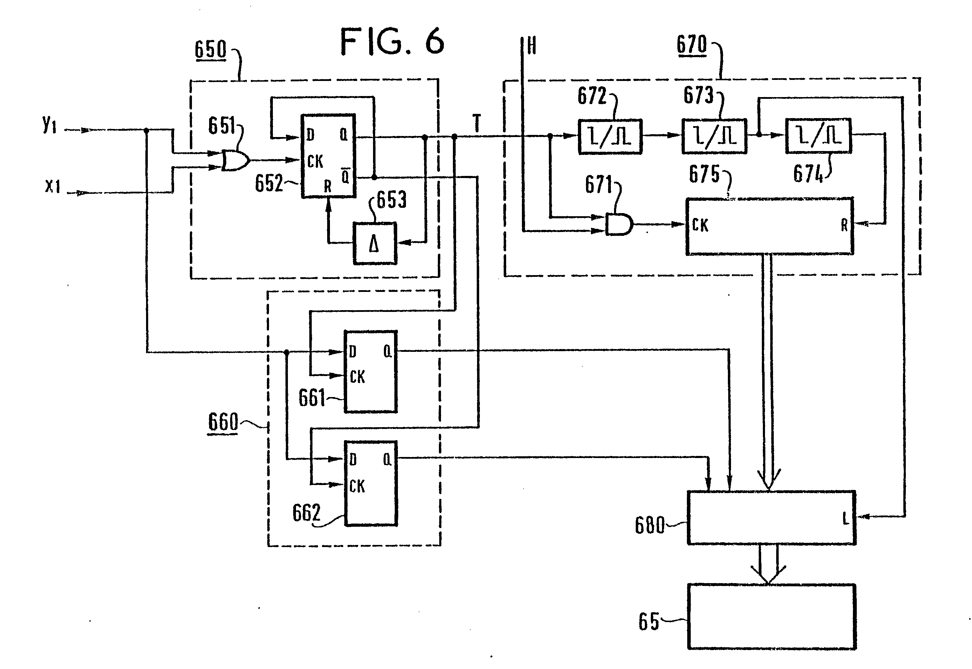

La figure 6 détaille un mode de réalisation du circuit 650 de discrimination entre les transitions de séquences préfixe et suffixe disposé à la suite des deux circuits de détection de transition 630, 640, ainsi que du circuit 660 d'identification des formes des séquences préfixe et suffixe et du circuit de chronométrage 670.

Le circuit 650 de discrimination entre les transitions de séquences préfixe et suffixe est composé d'une porte logique de type « ou » 651 avec deux entrées connectées aux sorties des circuits de détection de transition 630, 640, d'une bascule de type D 652 montée en diviseur par deux et connectée par son entrée d'horloge à la sortie de la porte logique « ou » 651, et d'un circuit à retard 653 de 110 μs reliant la sortie Q de la bascule de type D 652 à son entrée de remise à zéro.

Le circuit à retard 653 permet une remise systématique au niveau logique 0 de la sortie Q de la bascule de type D 652 après chaque passage au niveau logique 1 de cette dernière sortie. Au repos, c'est-à-dire en l'absence de message de télésignalisation cette bascule de type D 652 à sa sortie Q au niveau logique 0. En cas de réception d'un message de télésignalisation composé d'une séquence préfixe suivie, entre 50 μs et 100 μs plus tard d'une séquence suffixe, la sortie Q de la bascule de type D 652 passe au niveau logique 1 lors de la détection de la transition de la séquence préfixe par l'un des circuits de détection 630, 640 et repasse au niveau logique 0 entre 50 μs et 100 μs plus tard lors de la détection de la transition de la séquence suffixe. En cas de nondétection par suite d'erreurs de transmission de l'une des deux séquences préfixe ou suffixe, la sortie Q de la bascule de type D 652 repasse au niveau logique 0 au bout de 110 μs par l'action du circuit à retard 653.

Ainsi le créneau T délivré en sortie Q de la bascule de type D 652 correspond à l'intervalle de temps séparant les transitions d'une séquence préfixe et d'une séquence suffixe, à la durée de deux motifs près lorsqu'il dure entre 50 μs et 100 μs et à une erreur lorsqu'il dure 110 μs, l'incertitude sur les deux motifs étant due au fait qu'à l'émission, la transition dans une séquence n'est pas synchronisée avec les motifs.

Le circuit 660 d'identification des formes des séquences préfixe et suffixe est formé des deux bascules de type D 661, 662 ayant toutes les deux leur entrée donnée D recevant le signal $y_1$ du circuit de détection 630 spécialisé dans la détection des transitions apparaissant dans les séquences commençant par une partie complémentée et se terminant par une partie non complémentée. L'une des bascules de type D 661 a son entrée d'horloge CK sensible aux fronts montants connectée à la sortie Q de la bascule de type D 652 du circuit 650 de discrimination entre les transitions de séquence préfixe suffixe et recopie l'état de son entrée D à chaque front montant du créneau T, c'est-à-dire à chaque transition de séquence préfixe ; l'autre bascule de type D 662 a son entrée d'horloge sensible aux fronts montants connectée à la sortie complémentée $\overline{Q}$ de la bascule de type D 652 du circuit 650 de discrimination entre les transitions de séquence préfixe suffixe et recopie l'état de son entrée D à chaque front descendant du créneau T, c'est-à-dire à chaque transition de séquence suffixe. La bascule de type D 661 enregistre la forme de la séquence préfixe et la bascule de type D 662 la forme de la séquence suffixe. Elles passent l'une et l'autre au niveau logique 1 si la transition concernée est apparue dans une séquence formée d'une partie complémentée suivie d'une partie non complémentée et au niveau logique 0 dans le cas inverse.

Le circuit de chronométrage 670 fonctionne à partir du signal d'horloge H fournit par le circuit de récupération de cadence bit 63 et du créneau T délivré par le circuit 650 de discrimination entre les transitions de séquences préfixe et suffixe. Il comporte :

— une porte logique de type « et » 671 à deux entrées recevant les signaux logiques H et T,

— un premier circuit monostable 672 déclenché par les fronts descendants, qui reçoit le signal T et engendre en réponse une impulsion positive durant 1 μs,

— un deuxième circuit monostable 673 déclenché par les fronts descendants, qui est disposé à la suite du premier et qui engendre des impulsions positives de 0,5 μs,

— un troisième circuit monostable 674 déclenché par les fronts descendants, qui est connecté à la suite du deuxième et qui engendre des impulsions positives de 0,5 μs et

— un compteur à sortie parallèle 675 connecté par son entrée de comptage à la sortie de la porte logique de type « et » 671 et par son entrée de remise à zéro à la sortie du troisième circuit monostable 674.

Le compteur 675 est pourvu d'un prédiviseur abaissant sa période de comptage à 0,5 μs. Il compte les périodes d'horloge H appliquées à son entrée de comptage pendant les créneaux T par la porte logique de type « et » 671 et il est remis à zéro par la chaîne des trois monostables 672, 673, 674, 1,5 μs après la fin de chaque créneau T.

Le premier monostable 672 retarde de 1 μs par rapport au flanc descendant du créneau T la lecture du compteur 675. Le deuxième monostable 673 engendre une impulsion de 0,5 μs à destination de la commande de chargement de la mémoire d'échantillonnage 680 qui se charge alors avec le contenu du compteur 675 et des deux registres de type D 661, 662 du circuit d'identification de forme de séquence préfixe suffixe.

Le troisième monostable 674 émet une impulsion de remise à zéro du compteur 675 après chargement de la mémoire d'échantillonnage.

On retrouve dans ce circuit de réception un certain nombre de circuits fonctionnant à grand débit nécessitant une technologie très rapide grande consommatrice d'énergie. Mais cela est sans importance car l'exploitation de la télésignalisation ne se fait sur une liaison numérique que dans un petit nombre d'équipements en général non téléalimentées.

**Revendications**

1. Procédé de télésignalisation pour une liaison de transmission numérique consistant à transmettre la signalisation à l'aide d'un message numérique de même débit que le train numérique acheminé par la liaison aux données auquel il est momentanément substitué, caractérisé en ce que ledit message est formé de deux séquences non consécutives, la première dite séquence préfixe, la deuxième dite séquence suffixe, séparées par un intervalle de temps variable codant une information de télésignalisation, et découpées chacune en deux parties obtenues par répétition de deux motifs binaires se déduisant l'un de l'autre par complémentation, la transition entre les deux parties d'une séquence préfixe marquant le début de l'intervalle de temps codant une information de télésignalisation et la transition entre les deux parties d'une séquence suffixe marquant la fin de ce dernier intervalle de temps.

2. Procédé selon la revendication 1, caractérisé en ce que l'un desdits motifs est constitué de quatre éléments binaires successifs 1000.

3. Procédé selon la revendication 1, caractérisé en ce que l'emplacement dans une séquence d'une partie par rapport à l'autre code une information de télésignalisation.

4. Dispositif de mise en œuvre du procédé selon la revendication 1 sur une liaison numérique ayant au moins un équipement pourvu d'un circuit de détection et de gestion des alarmes (6') et d'un circuit (3) de récupération de cadence bit du train numérique, caractérisé en ce qu'il comporte au moins un circuit d'émission de message de télésignalisation (7) placé dans ledit équipement et pourvu :

— d'un générateur (10) de motifs binaires à quatre bits formé de deux diviseurs par deux (11, 12) connectés à la suite, à la sortie du circuit de récupération de cadence bit (3) et d'une porte logique de type « ou » (13) avec deux entrées connectées aux sorties des diviseurs par deux (11, 12) et avec deux sorties l'une complémentée l'autre non,

— d'un circuit de sélection de types de motifs qui est formé de portes logiques (14, 15, 18) et permet de sélectionner l'une des deux sorties du générateur de motifs (10),

— d'un aiguillage (19) permettant d'insérer momentanément le signal issu du circuit de sélection à la place des données du train numérique acheminé par la liaison,

— d'un oscillateur (20) définissant par sa période l'intervalle de temps séparant une séquence préfixe d'une séquence suffixe d'un message de télésignalisation émis par l'équipement considéré,

— d'un séquenceur (24) qui est déclenché par le circuit de détection et de gestion des alarmes (6') et qui détermine sous le contrôle de l'oscillateur (20) les instants initiaux des séquences préfixe et suffixe d'un message de télésignalisation,

— d'un circuit de composition d'une séquence préfixe (30) qui est déclenché en premier par le séquenceur (24) et qui agit par l'intermédiaire de portes logiques (22, 23) sur des entrées (16, 17) de sélection du circuit de sélection de types de motifs pour composer une séquence et sur une entrée de commande de l'aiguillage (19) pour insérer la séquence à la place des données du train numérique et

— d'un circuit de composition d'une séquence suffixe (40) qui est déclenché en second par le séquenceur (24) et qui agit par l'intermédiaire de portes logiques (22, 23) sur des entrées (16, 17) de sélection du circuit de sélection de types de motifs pour composer une séquence et sur une entrée de commande de l'aiguillage (19) pour insérer la séquence à la place des données du train numérique.

5. Dispositif selon la revendication 4, caractérisé en ce que lesdits circuits de composition d'une séquence préfixe (30) et suffixe (40) comportent chacun :

— un monostable (31, 41) définissant la durée d'une séquence et agissant sur l'entrée de commande de l'aiguillage (19),

— un circuit à retard (32, 42) connecté à la suite du monostable et définissant une partition de la séquence en deux, une partie complémentée l'autre non

— et un démultiplexeur à deux voies aboutissant sur les entrées (16, 17) de sélection du circuit de sélection de types de motifs, ledit démultiplexeur étant formé de portes logiques (33, 34, 43, 44), débloqué par le monostable (31, 41) et adressé par le circuit à retard (32, 42).

6. Dispositif selon la revendication 5, caractérisé en ce que l'un (30) desdits circuits de composition de séquence comporte en outre une boîte de connexion (35) intercalée aux sorties des deux voies du démultiplexeur qu'elle permet d'échanger ou non.

7. Dispositif selon la revendication 5, caractérisé en ce que l'un (40) desdits circuits de composition de séquence comporte en outre un circuit d'inversion à portes logiques (45, 46, 47, 48) intercalé aux sorties des deux voies du démultiplexeur qu'il permet d'échanger ou non sous la commande du circuit de détection et de gestion des alarmes (6').

8. Dispositif de mise en œuvre du procédé selon la revendication 1, sur une liaison numérique ayant au moins un équipement pourvu d'un circuit d'exploitation de la signalisation (65) et un circuit (63) de récupération de la cadence bit du train numérique, caractérisé en ce qu'il comporte au moins un circuit (60) de réception de message placé dans ledit équipement et muni :

— d'un circuit (610) de reconnaissance de partie non complémentée (P ou S) d'une séquence avec un détecteur de motifs de partie non complémentée engendrant à partir du train numérique et de la cadence bit de ce dernier, sur une première sortie, un signal (Y) de reconnaissance de partie non complémentée (P ou S) de séquence et, sur une deuxième sortie, un signal ($y_0$) d'identification du motif de partie non complémentée de séquence,

— d'un circuit (620) de reconnaissance de partie complémentée ($\overline{P}$ ou $\overline{S}$) d'une séquence avec un détecteur de motifs de partie complémentée engendrant à partir du train numérique et de la cadence bit de ce dernier, sur une première sortie, un signal (X) de reconnaissance de partie complémentée ($\overline{P}$ ou $\overline{S}$) de séquence et, sur une deuxième sortie, un signal ($x_0$) d'identification du motif de partie complémentée de séquence,

— d'un circuit (630) de détection des transitions existant dans les séquences formées d'une partie complémentée ($\overline{P}$ ou $\overline{S}$) suivie d'une partie non complémentée (P ou S) connecté en entrée aux deux sorties du circuit (610) de reconnaissance de partie non complémentée (P ou S) et à la première sortie du circuit (620) de reconnaissance de partie complémentée ($\overline{P}$ ou $\overline{S}$) et délivrant en sortie un signal ($y_1$) de détection de transition,

— d'un circuit (640) de détection des transitions existant dans les séquences formées d'une partie non complémentée (P ou S) suivie d'une partie complémentée ($\overline{P}$ ou $\overline{S}$) connecté en entrée aux deux sorties du circuit (620) de reconnaissance de partie complémentée ($\overline{P}$ ou $\overline{S}$) et à la première sortie du circuit (610) de reconnaissance de partie non complémentée (P ou S) et délivrant en sortie un signal ($x_1$) de détection de transition,

— d'un circuit (650) de discrimination entre les transitions de séquences préfixe et suffixe connecté en entrée aux sorties des circuits de détection des transitions (630, 640) engendrant en sortie un signal (T) formé d'un créneau limité par lesdites transitions,

— un circuit (660) d'identification des formes des séquences préfixe et suffixe connecté en sortie des circuits de détection des transitions (630, 640) et du circuit (650) de discrimination entre les transitions des séquences préfixe et suffixe, engendrant sur deux sorties, l'une spécialisée pour les séquences préfixe, l'autre pour les séquences suffixe un signal logique représentatif de l'ordre dans lequel ont été détectées les parties complémentée et non complémentée d'une même séquence,

— un circuit de chronométrage (670) connecté en sortie du circuit (650) de discrimination entre les transitions des séquences préfixe et suffixe dont il mesure la largeur du créneau de son signal de sortie (T) et

— une mémoire d'échantillonnage (680) qui reçoit les signaux de sortie du circuit (660) d'identification des formes des séquences préfixe et suffixe et du circuit de chronométrage (670) et qui est inscrite après chaque créneau du signal (T) engendré par le circuit (660) d'identification des formes des séquences préfixe et suffixe.

## Claims

1. A remote signalling method for a digital transmission link, the method consisting in transmitting signalling by means of a digital message at the same bitrate as the digital stream conveyed by the link, the message being momentarily substituted for the data being conveyed by the link, characterized in that the message is constituted by two non-consecutive sequences, the first sequence being a prefix sequence and the second sequence being a suffix sequence, said sequences being separated by a variable time interval which encodes remote signalling data, each of said sequences being themselves subdivided into two portions obtained by repeating two binary patterns, the one portion being the complement of the other, the transition between the two portions of a prefix sequence marking the beginning of said time interval encoding remote signalling data, and the transition between the two portions of a suffix sequence marking the end of said time interval.

2. A method according to claim 1, characterized in that one of said patterns is constituted by the four bits 1000 in succession.

3. A method according to claim 1, characterized in that the location of one portion within a sequence relative to the other encodes remote signalling data.

4. A device for implementing the method according to claim 1 on a digital link including at least one equipment fitted with a circuit (6') for detecting and handling alarms and with a circuit (3) for recovering the bit rate of the digital stream, characterized in that at least one circuit (7) is provided for transmitting a remote signalling message and located in said equipment, and comprises :

— a four-bit binary pattern generator (10) constituted by two divide-by-two circuits (11, 12) connected in series to the output of the bit rate recovery circuit (3), and by a two-input logic OR gate (13) having its two inputs connected to the outputs from respective ones of the divide-by-two circuits (11, 12), and having two outputs, one of which is a complemented output and the other of which is a non-complemented output,

— a pattern type selector circuit constituted by logic gates (14, 15, 18) and serving to select one or other of the two outputs from said pattern generator (10),

— a switching circuit (19) for momentarily inserting the signal from said selector circuit in the place of the digital stream data conveyed by the link,

— an oscillator (20) whose period defines the time interval separarting a prefix sequence from a suffix sequence in a remote signalling message as transmitted by the equipment under consideration,

— a sequencer (24) which is triggered by the circuit (6') for detecting and handling alarms and which is controlled by said oscillator (20) to determine the initial instants of the prefix and suffix sequences of a remote signalling message,

— a prefix sequence building circuit (30) which is triggered first by said sequencer (25) and which acts via logic gates (22, 23) on select inputs (16, 17) to said pattern type selector circuit in order to build up a sequence, and also on a switching control input (19) in order to insert the sequence in the place of the digital stream data, and

— a suffix sequence building circuit (40) which is triggered second by said sequencer (24) and which acts via logic gates (22, 23) on the select inputs (16, 17) to said pattern type selection circuit in order to build up a sequence, and also on the switching control input (19) in order to insert the sequence in place of the digital stream data.

5. A device according to claim 4, characterized in that said prefix (30) and suffix (40) sequence building circuits each comprise :

— a monostable (31, 41) defining the duration of a sequence and acting on the control input of said switching circuit (19),

— a delay circuit (32, 42) connected to the output from said monostable and defining a subdivision of a sequence into two portions, one of which being a complemented portion and the other a non-complemented portion, and

— a two-channel demultiplexer terminating on the select inputs (16, 17) to the pattern type selector circuit, said demultiplexer being constituted by logic gates (33, 34, 43, 44), which are enabled by the monostable (31, 41) and addressed by the delay circuit (32, 42).

6. A device according to claim 5, characterized in that one (30) of said sequence building circuits further includes a connection box (35) inserted between the outputs from said two demultiplexer paths, the box being adapted to interchange said paths, or not.

7. A device according to claim 5, characterized in that one (40) of said sequence building circuits further includes a logic gate interchange circuit (45, 46, 47, 48) inserted between the outputs of said two demultiplexer paths and serving to interchange said outputs or not under the control of the circuit (6') for detecting and handling alarms.

8. A device performing the method according to claim 1 on a digital link including at least one equipment having a circuit (65) for exploiting signalling and a circuit (63) for recovering the digital stream bit rate, characterized in that it comprises at least one message receiver circuit (60) placed in said equipment and provided with :

— a circuit (610) for recognizing a non-complemented portion (P or S) of a sequence together with a detector of non-complemented portion patterns adapted to deliver, in using the digital stream and the recovered bit rate thereof, at a first output, a signal (Y) which recognizes a non-complemented sequence portion (P or S) and at a second output a signal ($y_0$) which identifies pattern from a non-complemented sequence portion,

— a circuit (620) for recognizing a complemented portion ($\overline{P}$ or $\overline{S}$) of a sequence together with a detector of complemented portion patterns adapted to deliver, in using the digital stream and the recovered bit rate thereof, at a first output, a signal (X) which recognizes a complemented sequence portion ($\overline{P}$ or $\overline{S}$) and, at a second

output, a signal ($x_0$) which identifies the pattern from a complemented sequence portion,

— a circuit (630) for · detecting transitions in sequences constituted of a complemented portion ($\overline{P}$ or $\overline{S}$) followed by a non-complemented portion (P or S) with its inputs connected to the two outputs from the circuit (610) for recognizing non-complemented portions (P or S), and to the first output from the circuit (620) for recognizing complemented portions ($\overline{P}$ or $\overline{S}$) and having an output on which it delivers a transition detection signal ($y_1$),

— a circuit (640) for detecting transitions in sequences constituted of a non-complemented portion (P or S) followed by a complemented portion ($\overline{P}$ or $\overline{S}$), with its inputs connected to the two outputs from the circuit (620) for recognizing complemented portions ($\overline{P}$ or $\overline{S}$), and having an output on which it delivers a transition detection signal ($x_1$),

— a circuit (650) for discriminating between transitions in prefix sequences and in suffix sequences, with its inputs connected to the two outputs from the transition detector circuits (630, 640), and delivering an output signal T in the form of a square-type pulse delimited by said transitions,

— a circuit (660) for identifying the form of the portions in prefix and suffix sequences, said circuit being connected to the outputs from the transition detector circuits (630, 640) and from the circuit (650) for discriminating between prefix sequence transitions and suffix sequence transitions, and having two outputs, one being responsive to the prefix sequences and the other to the suffix sequences, said outputs delivering a logic signal representative of the order in which the complemented and non-complemented portions of a given sequence are detected,

— a timing circuit (670) connected to the output from the circuit (650) for discriminating between prefix sequence transitions and suffix sequence transitions, and serving to measure the duration of the square-type output signal (T) therefrom, and

— a sampling memory (680) which receives the output signal from the circuit (660) for identifying the form of the prefix sequences and suffix sequences and from the timing circuit (670) and to which data are written after the end of each square-type signal (T) generated by the circuit (660) for identifying the form of the prefix and suffix sequences.

**Patentansprüche**

1. Fernmeldeverfahren für eine digitale Übertragungsstrecke, bei dem die Meldung mit Hilfe einer digitalen Nachricht übertragen wird, welche die gleiche Bitrate besitzt wie die über die Strecke gesandten digitalen Daten, an deren Stelle sie kurzzeitig tritt, dadurch gekennzeichnet, daß die Nachricht aus zwei nicht aneinander anschließenden Folgen besteht, nämlich einer Präfixfolge und einer Suffixfolge, die durch ein veränderliches Zeitintervall getrennt sind, das eine Fernmeldung kodiert, und daß jede der Folgen in zwei durch Wiederholung zweier Binärmuster gewonnener Abschnitte unterteilt ist, wobei sich die Muster voneinander durch Komplementbildung ableiten, wobei der Übergang zwischen den beiden Abschnitten einer Präfixfolge den Beginn des eine Fernmeldeinformation kodierenden Zeitintervalls markiert und der Übergang zwischen den beiden Teilen einer Suffixfolge das Ende des genannten Zeitintervalls markiert.

2. Verfahren nach Anspruch 1, dadurch gekennzeichnet, daß eines der Muster aus den vier aufeinanderfolgenden Binärziffern 1000 besteht.

3. Verfahren nach Anspruch 1, dadurch gekennzeichnet, daß die Position eines Abschnitts in einer Folge im Vergleich zur anderen eine Fernmeldeinformation kodiert.

4. Vorrichtung zur Durchführung des Verfahrens nach Anspruch 1 auf einer digitalen Übertragungsstrecke, die mindestens ein Gerät mit einem Alarmerfassungs- und -abwicklungskreis (6') und einen Bittaktwiedergewinnungskreis (3) aufweist, dadurch gekennzeichnet, daß sie mindestens einen Fernmeldenachricht-Übertragungskreis (7) innerhalb des Geräts aufweist und ausgestattet ist mit :

— einem 4-Bit Binärmustergenerator (10), bestehend aus zwei Impulshalbierern (11, 12), die in Reihe an den Ausgang des Bittaktwiedergewinnungskreises (3) angeschlossen sind, und aus einem logischen ODER-Tor (13) mit zwei Eingängen, welche mit den Ausgängen der Halbierer (11, 12) verbunden sind, und mit zwei Ausgängen, von denen einer komplementär und der andere nichtkomplementär ist ;

— einem Mustertypenwahlkreis, der aus logischen Toren (14, 15, 18) besteht und einen der beiden Ausgänge des Mustergenerators (10) auszuwählen erlaubt ;

— einen Abzweigungskreis (19), der die kurzzeitige Einfügung des vom Wahlkreis abgegebenen Signals anstelle der über die Übertragungsstrecke gesandten digitalen Daten gestattet ;

— einem Oszillator (20), der mit seiner Schwingungsperiode das Zeitintervall definiert, welches eine Präfixfolge von einer Suffixfolge in einer von dem betrachteten Gerät ausgesandten Fernmeldenachricht trennt ;

— einem Schaltwerk (24), das durch den Alarmerfassungs- und -abwicklungskreis (6') ausgelöst wird und unter der Kontrolle des Oszillators (20) die Anfangszeitpunkte der Präfix- und Suffixfolgen einer Fernmeldenachricht bestimmt ;

— einem Kreis zum Aufbau einer Präfixfolge (30), der vom Schaltwerk (24) als erster ausgelöst wird und über logische Tore (22, 23) Wahleingänge (16, 17) des Mustertypenwahlkreises ansteuert, um eine Folge aufzubauen, und der einen Steuereingang des Abzweigungskreises (19) aktiviert, um die Folge anstelle der digitalen Daten einzufügen, und

— einem Kreis zum Aufbau einer Suffixfolge (40), der vom Schaltwerk (24) als zweiter ausgelöst wird und über logische Tore (22, 23) Wahleingänge (16, 17) des Mustertypenwahlkreises ansteuert, um eine Folge aufzubauen, und der einen Steuereingang des Abzweigungskreises (19) aktiviert, um die Folge anstelle der digitalen Daten einzufügen.

5. Vorrichtung nach Anspruch 4, dadurch gekennzeichnet, daß die Kreise einer Präfixfolge (30) und einer Suffixfolge (40) jeweils aufweisen:

— eine monostabile Kippstufe (31, 41), die die Dauer einer Folge definiert und auf den Steuereingang des Abzweigungskreises (19) einwirkt;

— einen Verzögerungskreis (32, 42), der in Reihe mit der monostabilen Kippstufe geschaltet ist und eine Unterteilung der Folge in zwei Abschnitte definiert, von denen der eine komplementär, der andere nicht-komplementär ist; und

— einen Zweikanal-Demultiplexer, der an den Wahleingängen (16, 17) des Mustertypenwahlkreises endet und aus logischen Toren (33, 34, 43, 44) besteht, die durch die monostabile Kippstufe (31, 41) freigegeben und durch den Verzögerungskreis (32, 42) adressiert werden.

6. Vorrichtung nach Anspruch 5, dadurch gekennzeichnet, daß einer (30) der Folgenaufbaukreise weiter einen Anschlußkasten (35) aufweist, der zwischen die Ausgänge der beiden Kanäle des Demultiplexers geschaltet ist und diese zu vertauschen gestattet.

7. Vorrichtung nach Anspruch 5, dadurch gekennzeichnet, daß einer (40) der Folgenaufbaukreise weiter einen Inversionskreis mit logischen Toren (45, 46, 47, 48) aufweist, der zwischen die Ausgänge der beiden Kanäle des Demultiplexers geschaltet ist und sie unter der Kontrolle des Alarmerfassungs- und -abwicklungskreises (6') zu vertauschen gestattet.

8. Vorrichtung zur Durchführung des Verfahrens nach Anspruch 1 auf einer digitalen Übertragungsstrecke, die mindestens ein Gerät mit einem Meldungs-Auswertekreis (65) und einem Bittaktwiedergewinnungskreis (63) aufweist, dadurch gekennzeichnet, daß sie mindestens einen Nachrichtenempfangskreis (60) innerhalb des Geräts besitzt, der ausgestattet ist mit:

— einem Kreis (610) zur Erkennung des nicht-komplementären Abschnittes (P oder S) einer Folge mit einem Detektor zur Erfassung von Mustern des nicht-komplementären Abschnittes, welcher aus dem Datenstrom im Bitakt an einem ersten Ausgang ein Erkennungssignal (Y) des nicht-komplementären Abschnitts (P oder S) der Folge, und an einem zweiten Ausgang ein Identifikationssignal ($y_0$) des Musters des nicht-komplementären Abschnittes der Folge ausgibt;

— einem Kreis (620) zur Erkennung des komplementären Abschnittes ($\overline{P}$ oder $\overline{S}$) einer Folge mit einem Detektor zur Erfassung der Muster des komplementären Abschnittes, welcher aus dem Datenstrom im Bitakt an einem ersten Ausgang ein Erkennungssignal (X) des komplementären Abschnitts ($\overline{P}$ oder $\overline{S}$) der Folge, und an einem zweiten Ausgang ein Identifikationssignal ($x_0$) des Musters des komplementären Abschnittes der Folge ausgibt;

— einem Kreis (630) zur Erfassung der Übergänge, die in den aus einem komplementären Abschnitt ($\overline{P}$ oder $\overline{S}$), mit einem anschließenden nicht-komplementären Abschnitt (P oder S) gebildeten Folgen bestehen, wobei der Kreis eingangsseitig an die beiden Ausgänge des Erkennungskreises (610) des nicht-komplementären Abschnittes (P oder S) sowie an den ersten Ausgang des Erkennungskreises (620) des komplementären Abschnitts ($\overline{P}$ oder $\overline{S}$) angeschlossen ist und am Ausgang ein Übergangserfassungssignal ($y_1$) liefert,

— einem Kreis (640) zur Erfassung der Übergänge, die in den aus einem nicht-komplementären Abschnitt (P oder S) gefolgt von einem komplementären Abschnitt ($\overline{P}$ oder $\overline{S}$) gebildeten Folgen bestehen, wobei der Kreis eingangsseitig an die beiden Ausgänge des Erkennungskreises (620) des komplementären Abschnittes ($\overline{P}$ oder $\overline{S}$) sowie an den ersten Ausgang des Erkennungskreises (610) des nicht-komplementären Abschnitts (P oder S) angeschlossen ist und am Ausgang ein Übergangserfassungssignal ($x_1$) liefert,

— einem Kreis (650) zur Unterscheidung zwischen den Übergängen der Präfix- und Suffixfolgen, der eingangsseitig an die Ausgänge der Übergangserfassungskreise (630, 640) angeschlossen ist und am Ausgang ein Signal T liefert, das aus einem durch diese Übergänge begrenzten Rechteckimpuls besteht;

— einem Kreis (660) zur Identifizierung der Formen der Präfix- und Suffixfolgen, der an den Ausgang der Übergangserfassungskreise (630, 640) und des Kreises (650) zur Unterscheidung zwischen den Übergängen der Präfix- und Suffixfolgen angeschlossen ist und an zwei Ausgängen, von denen einer auf die Präfixfolgen und der andere auf die Suffixfolgen spezialisiert ist, ein logisches Signal ausgibt, welches die Reihenfolge anzeigt, in der der komplementäre und der nichtkomplementäre Abschnitt einer Folge erfaßt wurden;

— einen Zeitmeßkreis (670), der an den Ausgang des Kreises (650) zur Unterscheidung der Übergänge in den Präfix- und Suffixfolgen angeschlossen ist und die Impulsbreite seines Ausgangssignals (T) mißt; und

— einem Tastprobenspeicher (680), der die Ausgangssignale des Kreises (660) zur Identifizierung der Formen der Präfix- und Suffixfolgen sowie des Zeitmeßkreises (670) aufnimmt, und der nach jedem Rechteckimpuls des Signals (T) geladen wird, das vom Identifikationskreis (660) der Formen der Präfix- und Suffixfolgen erzeugt wird.

# FIG. 1

FIG. 2

# FIG. 3

## FIG. 4

# FIG. 5

EP 0 184 107 B1

# FIG. 6

EP 0 184 107 B1